Europäisches Patentamt

(19) European Patent Office

Office européen des brevets

(11) Numéro de publication: **0 275 757
B1**

(12) **FASCICULE DE BREVET EUROPEEN**

(45) Date de publication du fascicule du brevet:
**07.02.90**

(21) Numéro de dépôt: **87402875.6**

(22) Date de dépôt: **16.12.87**

(51) Int. Cl.⁴: **F02K 1/12,** F02K 1/00, F02K 1/62

(54) **Tuyère bidimensionnelle réglable, notamment pour réacteur d'avion.**

(30) Priorité: **17.12.86 FR 8617632**

(43) Date de publication de la demande:
**27.07.88 Bulletin 88/30**

(45) Mention de la délivrance du brevet:
**07.02.90 Bulletin 90/6**

(84) Etats contractants désignés:
**DE FR GB**

(56) Documents cités:
**FR-A- 1 479 351
FR-A- 2 483 523
GB-A- 2 155 552
US-A- 4 245 787
US-A- 4 310 121**

(73) Titulaire: **SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)**

(72) Inventeur: **Jourdain, Gérard Ernest André, 4, Résidence
l'Arcadie Saintry sur Seine, F-91100 Corbeil
Essonnes(FR)**
Inventeur: **Loubet, Marc Georges, 87-3, Chemin des
Acacias, F-77176 Nandy Cidex 510(FR)**
Inventeur: **Payen, Jean Michel, 116, Square A. Rodin,
F-77350 Le Mée sur Seine(FR)**

(74) Mandataire: **Moinat, François et al, S.N.E.C.M.A. Service
des Brevets Boîte Postale 81, F-91003 Evry Cédex(FR)**

ACTORUM AG

## Description

La présente invention est relative à une tuyère réglable pour éjecter un fluide destiné notamment à la propulsion d'un avion.

Il est demandé à une tuyère réglable de pouvoir modifier sa section et sa forme, plus ou moins convergente-divergente, de façon à obtenir la poussée optimale en fonction du régime du moteur, il lui est demandé aussi de pouvoir modifier la direction de sortie des gaz, enfin elle doit pouvoir prendre une disposition d'inversion de poussée.

On a proposé, pour obtenir ces résultats, des tuyères dites "bi-dimensionnelles", comprenant une structure fixe, à section carrée ou rectangulaire, comportant deux parois parallèles fixes, et deux parties mobiles, constituées, chacune d'un ensemble de volets susceptibles de pivoter autour d'axes parallèles pour prendre des positions variables afin de faire varier la section, la forme convergente-divergente et l'orientation de la tuyère, ainsi que pour lui donner une configuration d'inversion de poussée, ces ensembles de volets comportant chacun :

- au moins un volet amont ou "de convergent".
- au moins un volet aval ou "de divergent",
situé en arrière du volet amont, articulé sur lui et constituant avec lui une partie de la surface interne de la tuyère,
- au moins un volet d'inversion, susceptible de passer d'une position où il fait partie de la paroi externe de la tuyère à une position où il fait partie des parois d'un passage d'inversion de poussée,

Ladite tuyère comportant, en outre, un système de commande à vérins et bielles pour déplacer lesdits volets, ce système de commande étant logé sur la face externe des parois fixes.

Des tuyères bi-dimensionnelles du type qu'on vient de mentionner, ou analogues, sont décrites notamment dans GB-A-2.155.552 et dans FR-A-2.483.523.

Les systèmes connus ont pour particularité de comporter un système de commande compliqué ou fragile : dans GB-A-2.155.552, il est prévu quatorze vérins hydrauliques, logés à l'extérieur des deux parois latérales, pour déplacer six volets mobiles. Dans FR-A-1.483.523, il n'est prévu qu'un organe moteur par volet mobile, soit huit en tout, mais au moins les organes moteurs des volets primaires sont logés à l'intérieur de ceux-ci, avec des arbres allant d'une paroi latérale à l'autre, dans des conditions d'accessibilité de température peu satisfaisantes.

Un autre inconvénient des dispositifs connus est que la force demandée à chaque organe moteur n'est pas constante tout le long de sa course.

Une autre particularité des dispositifs connus est que le volet aval, de forme effilée vers l'aval, constitue non seulement une partie de la surface interne de la tuyère, mais, par sa face extérieure, une partie de la surface externe de la tuyère. Cette disposition simple fait qu'on n'a pas pu canaliser un flux d'air frais pour refroidir la surface interne des volets, ceux-ci constituent des caissons dont l'épaisseur est importante en dehors de l'extémité aval de la tuyère.

La présente invention a pour but de fournir une tuyère bi-dimensionnelle réglable, du type indiqué plus haut, et qui ne comporte pas les inconvénients qu'on vient d'exposer, en particulier dont les moyens de commande soient simples et puissent facilement être optimisés en puissance, et protégés contre les échauffements. Ces résultats, et d'autres qui seront exposés plus loin, sont obtenus par le fait que le système de commande est formé de quatre ensembles de commande, logés chacun à l'extérieur d'une paroi latérale fixe, et comprenant chacun :

- un cadre mobile capable de se déplacer parallèlement à l'axe longitudinal de la tuyère et de pivoter autour d'un axe perpendiculaire au plan des parois latérales,
- une pièce à came, articulée d'une part sur ledit cadre et d'autre part sur un volet aval, et portant une surface de came,
- un galet de came, fixe, coopérant avec ladite surface de came,
- une articulation portée également par le cadre mobile et reliant celui-ci au volet amont, qui est articulé, en un autre point, audit volet aval, et en ce que le quadrilatère dont les sommets sont les articulations reliant le cadre mobile, la pièce à came et les deux volets amont et aval, a au moins deux côtés opposés de longueur différente.

Le quadrilatère ainsi formé n'est donc pas un parallélogramme déformable, ce qui signifie que, si une de ses côtés, à savoir celui qui est formé par le cadre mobile, se déplace parallélement à lui-même, le côté opposé, c'est-à-dire le volet aval, ne reste pas parallèle à lui-même et peut donc prendre des orientations variables. Le volet amon prend, lui-aussi, des orientations variables.

Plus précisément, lorsque le cadre mobile se déplace uniquement dans le sens parallèle à l'axe de la tuyère, chacune de ses positions correspond à une valeur et une seule de l'inclinaison par rapport à l'axe du volet amont et du volet aval. On conçoit qu'il est possible de tracer la came de façon à obtenir les inclinaisons désirées dans la pratique.

De préférence, les deux ensembles logés à l'extérieur d'une même paroi ont un cadre mobile commun, et leurs autres éléments sont symétriques par rapport à un plan passant par l'axe. Un déplacement de ce cadre commun parallélement à l'axe a pour conséquence que, si les volets sont symétriques par rapport au même plan passant par l'axe, cette symétrie est conservée par un déplacement du cadre commun parallélement à l'axe. On peut donc passer, par le déplacement d'une seule pièce, le cadre commun par exemple, d'une situation "plein gaz - pleine charge", où la partie "amont" de la tuyère correspondant au volet amont, est faiblement convergente, et la partie aval de ladite tuyère est divergente, à une situation "plein gaz sec" où la partie amont est fortement covergente, et la partie aval est aussi convergente mais plus faiblement, et même à une situation "fermée", où les volets aval viennent en contact dans un plan contenant l'axe.

Si l'on désire un déplacement non symétrique des volets, pour passer en position de "déviation de jet", on peut prévoir que les cadres des deux ensembles de commandes logés à l'extérieur d'une paroi latérale ne sont pas solidaires et ont des déplacements distincts. On peut également prévoir que le cadre est commun mais se déplace de façon non parallèle à l'axe de symétrie de la tuyère. La solution préférée consiste à prévoir que le cadre mobile peut pivoter autour d'un axe perpendiculaire au plan des parois fixes, et situé dans le plan de l'axe de symétrie de la tuyère. On obtient ainsi une construction particulièrement simple.

De préférence, le cadre mobile commun situé d'un côté de la tuyère est relié au cadre mobile commun situé de l'autre côté de la tuyère pour constituer une structure rectangulaire rigide. On observe que, dans ce cas, on peut obtenir une certaine redondance des moyens d'actionnement propres à chacun des ensembles de commande.

Suivant d'autres modalités avantageous :

- la pièce à came est maintenue en appui contre le galet de came par l'effet de la poussée du fluide circulant dans la tuyère, et des moyens sont prévus pour maintenir ladite came en contact avec ledit galet de came même en l'absence de poussée du fluide.
- la tuyère comporte un volet extérieur mobile, relié au volet aval par au moins une bielle.
- la tuyère comprend des volets d'inversions de poussée,qui s'ouvrent pour laisser passage au fluide sous l'effet d'un déplacement du cadre.

De préférence, il est prévu un système articulé de commande de ces volets d'inversion de poussée, et des moyens pour maintenir ces volets fermés pendant une première partie du trajet du cadre correspondant à une première gamme de dispositions des volets amont et aval, et pour ouvrir ces volets d'inversion de poussée pendant une seconde partie du trajet du cadre correspondant à une seconde gamme de dispositions des volets amont et aval, cette seconde gamme comprenant une disposition où la tuyère est fermée vers l'aval. Suivant une réalisation intéressante, les moyens pour maintenir les volets comprennent un galet, ou un touchau de came qui se déplace dans une glissière ou le long d'une came comportant une partie rectiligne, qui correspond à la première gamme de dispositions, et une partie courbe, qui correspond à la seconde gamme de dispositions. En tout cas, il est préféré de prévoir que le système articulé de commande des volets d'inversion de poussée est sensible à un déplacement longitudinal du cadre, et est insensible à un changement d'inclinaison de celui-ce. Pour cela ou prévoit, de façon avantageuse, que ledit système articulé est relié au cadre mobile en un point situé sur l'axe de pivotement dudit cadre.

L'invention va maintenant être exposée de façon plus détaillée à l'aide d'un exemple pratique, non limitatif, de tuyère pur avion à réaction, illustrée à l'aide des dessins, parmi lesquels :

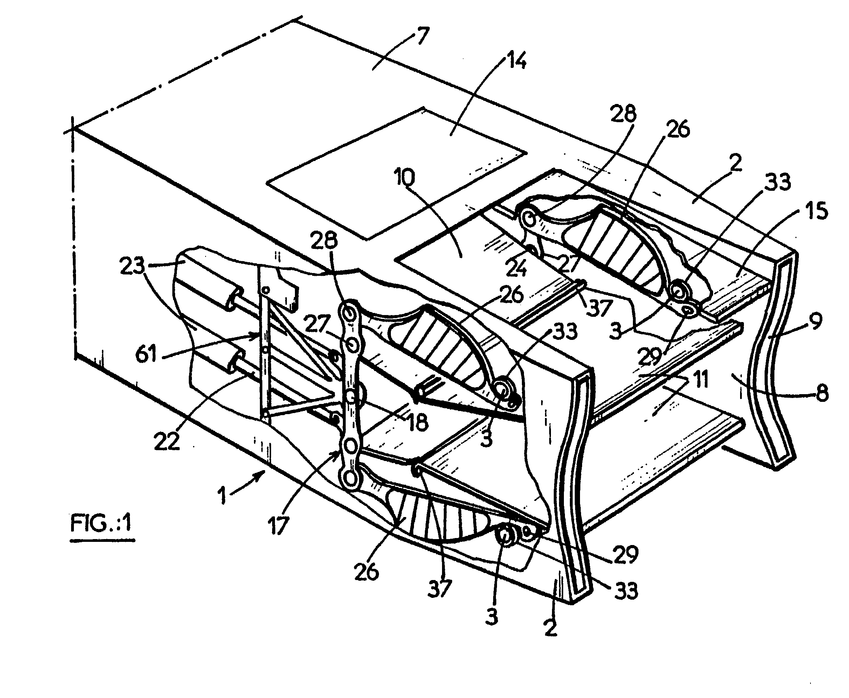

Figure 1 est une vue en perspective partiellement arrachée d'une tuyère selon l'invention,

Figure 2 est une demi-vue de côté de la tuyère, la poterne étant supposée enlevée,

Fiugres 3 à 6 sont des schémas représentant diverses positions des volets.

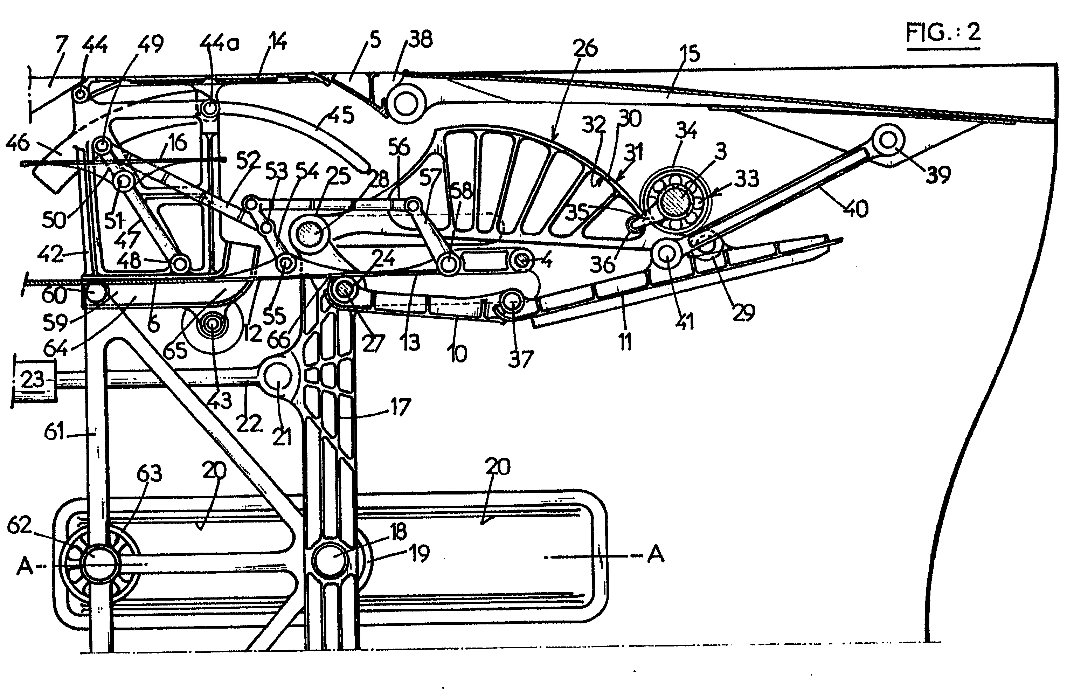

La tuyère 1 pour avion à réaction décrite aux dessins comprend deux panneaux fixes 2 verticaux et parallèles reliés entre-eux par deux premiers tirants transversaux 3 et deux seconds tirants transversaux 4, ainsi que par deux poutres transversales 5. Les tirants et poutres, dont un seul est représenté à la figure 2, sont disposés symétriquement par rapport à un plan horizontal AA passant par l'axe de la tuyère. En amont du dispositif décrit, les panneaux fixes sont reliés par des parois transversales interne 6 et externe 7, dont seule l'extrémité aval est visible sur la figure 2.

Les panneaux latéraux sont à double peau, et les systèmes de commande sont logés entre les peaux interne 8 et externe 9, la peau interne constitue la "paroi" au sens des pages précédentes du présent texte.

Les parois mobiles supérieure et inférieure comportent les mêmes volets mobiles, on ne mentionnera ici que ceux de la paroi supérieure.

Il s'agit d'abord du volet amont 10 et du volet aval 11, d'un premier et d'un second volets d'inversion de poussée 12, 13. Ces quatre volets mobiles viennent en continuation, en marche normale, de la paroi transversale fixe interne 6, et constituent avec elle la paroi supérieure interne de la tuyère.

La paroi supérieure externe de la tuyère comprend un troisième volet mobile d'inversion de poussée 14 qui, en marche normale, se raccorde à la paroi transversale fixe externe 7, et un volet externe 15, qui, en marche normale, vient en continuation du troisième volet d'inversion de poussée, et s'étend vers l'aval au-delà du volet aval 11.

Un quatrième volet mobile d'inversion de poussée 16 est placé entre les extrémités des deux parois transversales fixes 6 et 7, et vient obturer l'espace entre ces parois lors de l'inversion de poussée. Ces colets mobiles comportent à leurs extrémités transversales des pivots qui viennent, en général, traverser la peau interne 8 des parois latérales. Les pivots des volets amont et aval, ainsi que du troisième volet d'inversion de poussée, qui sont eux-mêmes mobiles par rapport aux parois latérales, traversent celles-ci par des lumières ou passages élargis, pourvus de tôles d'étanchéité.

Le système de commande comprend quatre ensembles sensiblement identiques, dont on va énumérer les éléments relatifs à un ensemble supérieur.

Un cadre rigide 17, commun à deux ensembles de commande situés dans le même panneau latéral, est monté sur un pivot 18 muni d'un galet 19, qui se déplace dans une glissière 20 dont l'axe est dans le plan de l'axe AA de symétrie de la tuyère, cette glissière est portée par la peau extérieure 9. Le cadre 17 porte, dans sa moitié supérieure, trois articulations : la première 21, placée sur la face amont du cadre, relie celui-ci à la tige 22 d'un vérin d'actionnement 23, horizontal en position normale. La seconde articulation 24, placée sur la face aval du cadre, constitue le palier à pivot du volet amont, et la troisième articulation 25, située au sommet du cadre, mais qui pourrait être sur sa face aval, relie le cadre à la pièce à came 26. Le cadre est symétrique par rapport à un plan horizontal, en position normale, et on retrouve les mêmes articulations à sa partie inférieure, audessous du plan horizontal AA de symétrie de la tuyère.

Des tirants transversaux 27 et 28 sont coaxiaux aux seconde et troisième articulations 24 et 25. Ils joignent le cadre 17 à son correspondant de la paroi verticale opposée, formant ainsi une structure rectangulaire rigide, si bien qu'en cas de défaillance d'un des quatre vérins chargés de l'actionner, elle pourrait néanmoins être déplacée. Le premier, 27, des tirants transversaux dont on vient de parler est solidaire du volet amont 10, qu'il maintient sur son bord amont.

La pièce à came 26 est une plaque verticale s'étendant entre l'articulation 4 dont on vient de parler, et une autre articulation 29, qui sert de palier à un pivot du volet aval 11. Un des bords de la pièce à came 26 constitue une nervure 30 perpendiculaire à son plan, et dont la face externe 31 est usinée pour former une face de came curviligne, grossièrement en arc de cercle, passant à proximité de l'articulation 29, mais s'écartant de l'articulation 4. Le bord interne 32 de la nervure 30 est également usiné pour former une surface d'appui dont on verra plus loin l'utilité.

Un roulement à billes 33 est monté sur le tirant transversal 3, lequel prend appui sur la peau extérieure 9.

La bague extérieur de roulement 33 porte la surface de galet 3 qui coopère avec la surface de came 30. On observera que le roulement est de dimensions relativement importantes. Cela provient du fait qu'il doit supporter une partie importante de la poussée des gaz sur le volets amont et aval. Un bras 35, également monté pivotant sur le tirant 3, porte un galet 36, de plus petites dimensions que le galet 34, et qui vient porter sur la face interne 32 de la nervure 30. Ce galet maintient la pièce à came 26 en contact avec le galet 34 même à l'arrêt où la poussée des gaz ne se fait plus sentir.

A son extrémité amont, le volet aval 11 est articulé sur l'extrémité aval du volet amont par l'intermédiaire d'un axe 37, lequel ne traverse pas la peau interne 8.

Le volet externe 15 est monté, à son extrémité amont, sur des chapes d'articulation 38 portées par la poutre transversale 5 dont la face supérieure fait partie de la paroi supérieure externe. Le volet externe 15 port également, dans sa partie aval, un pivot 39 qui est relié par des biellettes 40 placées entre les peaux externe et interne, à des pivots 41 disposés sur la face supérieure du volet aval 11. On observera sur la figure que l'axe du pivot 41 est placé à proximité de celui de l'articulation 29 qui relie le volet aval 11 à la pièce à came 26. En fait, la position des pivots 29 et 41 et la longueur de la biellette 40 sont déterminées par le souci de régler au mieux, dans les différentes situations, la distance entre les extrémités aval du volet aval 11 et du volet externe 15, et de réduire ainsi la "traînée de culot".

On va maintenant décrire le mécanisme d'actionnement des volets d'inversion de poussée. Ce mécanisme comprend une pièce pivotante 42 montée sur un pivot 43 porté par la peau externe.

Cette pièce est solidaire du troisième volet mobile d'inversion de poussée 14, ou "volet d'étanchéité externe", par l'intermédiaires de deux axes, 44 et 44a, solidaires de volet 14, et dont le second 44a traverse la peau interne par une lumière en arc de cercle 45, pourvue d'un volet d'étanchéité 46. La trajectoire de l'autre axe 44, lors des pivotements prévus de la pièce pivotante, se situe essentiellement en dehors des parois verticales.

La pièce pivotante 42 actionne également, lorsqu'elle pivote, une tringlerie de commande des autres volets d'inversion de poussée. Cette tringlerie comporte :

- Une première biellette 47, articulée en 48 sur la pièce pivotante, et en 49 sur une seconde biellette 50, solidaire du volet intermédiare 16, si bien que le pivotement de la pièce pivotante 42 déplace la première biellette 47, qui à son tour fait pivoter le volet intermédiaire sur son axe 51,

- Une troisième biellette 52, articulée en 53 sur la première biellette 47, etc, à son extrémité opposée, sur une quatrième biellette 54, solidaire du premier volet d'inversion de poussée 12, si bien que celui-ci pivote de la même manière sur son axe 55, lors du mouvement de la pièce pivotante 42,

- Une cinquième biellette 56, qui relie la quatrième biellette 54 à une sixième biellette 57, solidaire du second volet d'inversion de poussée 13, qui est ainsi entraîné de la même manière à pivoter sur son axe 58.

Les longeurs des différentes biellettes sont calculées pour que les volets d'inversion de poussée restent à peu près parallèles entre-eux lors de leurs déplacements.

Le pivotement de la pièce pivotante 42 est obtenu de la façon suivante : une glissière coudée 59 est portée par la pièce pivotante, et un galet 60, porté par un équipage mobile 61 peut se déplacer dans cette glissière . L'équipage mobile est abstreint à ne se déplacer que dans une direction parallèle à l'axe de la tuyère. Pur cela, l'équipage mobile est solidaire du pivot 18 du cadre mobile 17, et il porte un autre pivot 62, également muni d'un galet 63, et qui se déplace dans la même glissière axiale 20 que le galet 19 du cadre mobile 17. La glissière coudée 59 de la pièce pivotante comporte une partie rectiligne 64, suivie d'une partie courbe 65, et les dimensions de l'équipage mobile sont calculées pour que, lorsque le galet 60 se déplace dans cette partie rectiligne, celle-ci soit parallèle à l'axe de la tuyère. Pour cela, il suffit que la distance du galet 60 à l'axe AA de la glissière 20 soit égaleà la somme de la distance de l'axe de la partie rectiligne 64 de la glissière coudée 59 au pivot 43 de la pièce pivotante 42 et de la distance entre ce pivot 43 et l'axe AA de la glissière axiale 20. Il en résulte que l'équipage mobile 61, et donc le cadre mobile 17, peuvent se déplacer sur une certaine distance sans déplacer la pièce pivotante 42, et donc sans changer la position des volets d'inversion de poussée. On a calculé la tringlerie our que cette position corresponde à la fermeture de ces volets.

Dans cette situation, les premier et second volets d'inversion de poussée 13, 14 constituent ensemble une surface plane, parallèle à l'axe AA de la tuyère, et le bord supérieur de l'avant du volet amont 14, lié au tirant 27 et à l'articulation 24 du cadre mobile 17, est tangent à cette surface plane, des moyens souples 66 sont prévus pour l'étanchéité/

Le fonctionnement est le suivant :

Supposons d'abord qu'on recherche un fonctionnement symétrique par rapport à l'axe (sans déviation de jet).

Le cadre mobile 17 est d'abord situé à l'extrémité amont, c'est-à-dire que le vérin 23 est rétracté, les autres vérins similaires d'actionnement du cadre étant également rétractés.

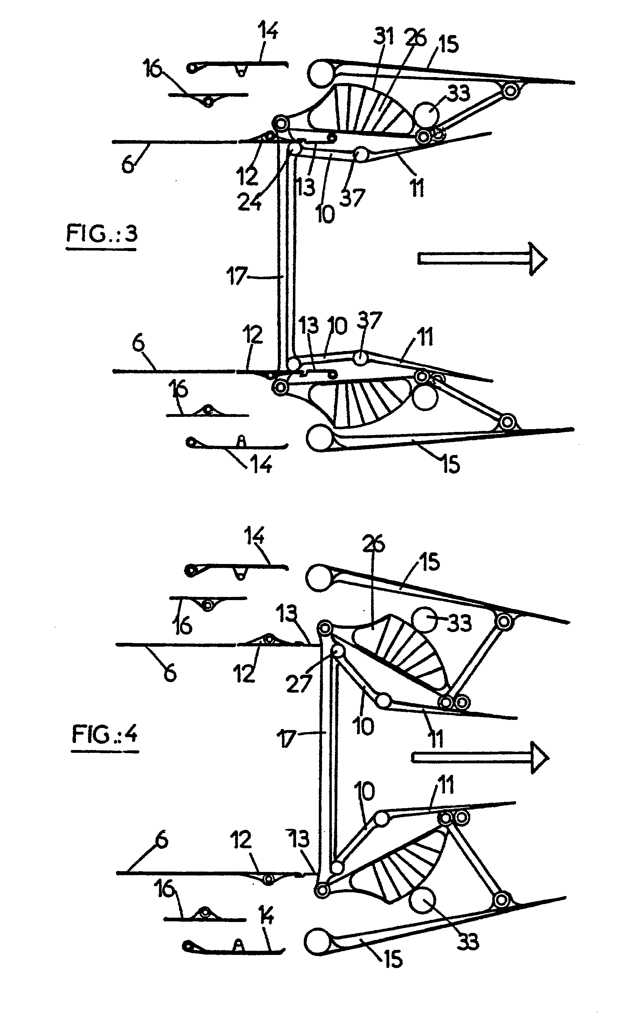

La situation est celle qu'on voit en détail à la figure 2, et à plus petite échelle à la figure 3 : les volets amont et arrière sont tirés par le cadre 17 à leur position extrême amont, qu en raison de la forme de la came 31, correspond à l'ouverture la plus large de la tuyère, avec les volets amont 10 légèrement convergents, et les volets arrière 11 divergents.

Si on allonge les vérins, ce qui déplace le cadre 17 vers l'arrière, on tend vers la situation de la figure 4, où le volet amont est fortement convergent et où le volet aval est lui-aussi convergent, ce qui correspond à un fort rétrécissement de la veine de gaz. Pendant le déplacement vers cette position, le galet 60 entraîné par l'équipage mobile 61 se déplace dans la partie rectiligne 64 de la gouttière 59,et, cette partie rectiligne étant horizontale, la pièce pivotante 42 ne bouge pas, si bien que les volets d'inversion de poussée restent fermés. Le bord aval du volet amont 10, qui est fixé au cadre 17 par l'articulation 27, se déplace parallèlement à l'axe de la tuyère. Au départ, il était en contact avec le premier volet d'inversion de poussée 12, il glisse donc sur lui, puis sur le second volet d'inversion de poussée 13, et finalement peut atteindre le bord aval de ce dernier (figure 4).

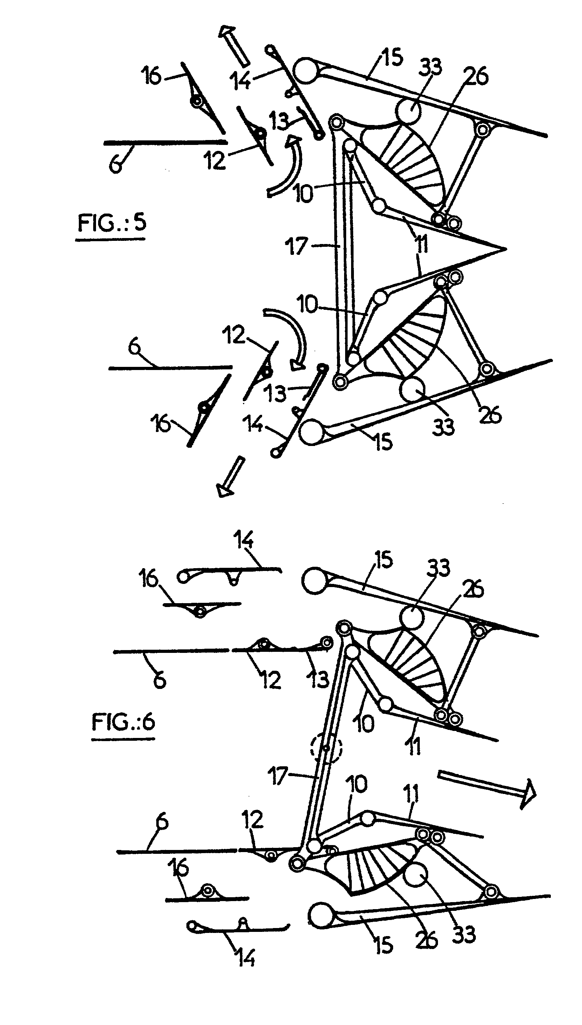

Si on continue le mouvement du cadre 17 vers l'aval, la convergence des volets 10 et 11 augmente et ils tendent à fermer la tuyère (figure 5) mais, simulanément, le galet 60 atteint le tourant 65 de la glissière 59. Il fait alors pivoter la pièce pivotante 42 sur son pivot 43, ce qui a pour effet de faire pivoter simultanément les quatre volets d'inversion de poussée 12, 13, 14, 15, si bien que les gaz peuvent s'échapper dans une direction opposée à celle de la direction intiale.

Supposons maintenant qu'on désire dévier le jet hors de l'axe de la tuyère.

On se place d'abord dans une position symétrique où le galet 34 se trouve écarté des extrémités de la came 26, par exemple à peu près son milieu, c'est-à-dire une position intermédiaire entre celle des figures 3 et 4. On actionne alors les vérins 23 d'une façon différentielle : les vérins situés au-dessus du plan horizontal de l'axe AA étant sortis, et les vérins étant situés au-dessous du même axe étant rentrés (on peut évidemment faire l'inverse). Le cadre bascule alors, sa partie supérieure vers l'aval et sa partie inférieure vers l'amont. Il en résulte que les positions relativers des cames 26 supérieure et inférieure par rapport au galet fixe 34 qui leur sont associés ne sont plus les mêmes, et que les orientations des volets 11 et 12 correspondants diffèrent. Le jet est donc dévié vers le bas, comme indiqué à la figure 6. Le galet 60 lié au cadre 61 est loin de la fin de sa course vers l'aval, les volets d'inversion de poussée restent donc fermés. Le bord amont des volets amont 10 décrit un arc de cercle à tangente horizontale, il s'écarte donc légèrement des premier et second volets 12, 13 d'inversion de poussée, mais l'écart reste faibles et peut donc être comblé par les moyens souples d'étanchéité 66.

**Revendications**

1. Tuyère d'éjection de turbine à gaz comprenant une structure fixe à section carrée ou rectangulaire, comportant deux parois parallèles fixes (8) et deux parties mobiles constituées chacune d'un ensemble de volets susceptibles de pivoter autour d'axes parallèles pour prendre des positions variables et faire varier la section, la forme convergente - divergente et l'orientation de la tuyère, ainsi que pour lui donner une configuration d'inversion de poussée. ces ensembles de volets comportant chacun :
   - au moins un volet amont (10),
   - au moins un volet aval (11), articulé sur lui, et constituant avec lui une partie de la surface interne de la tuyère,
   - au moins volet d'inversion de poussée (14) susceptible de passer d'une position où il fait partie de la paroi externe de la tuyère à une position où il fait partie des parois d'un passage d'inversion de poussée, ladite tuyère comportant en outre un système de commande à vérins et bielles pour déplacer lesdits volets, ce système de commande étant logé sur la face externe des parois fixes (8), caractérisée en ce que le système de commande est formé de quatre ensembles de commande, logés chacun à l'extérieur d'une paroi latérale fixe (8) et comprenant chacun :
   - un cadre mobile (17) capable de se déplacer parallèlement à l'axe AA longitudinal de la tuyère,
   - une pièce à came (26), articulée d'une part sur ledit cadre (17) et d'autre part sur un volet aval (11) et portant une surface de came (31),
   - un galet de came (34) fixe, coopérant avec ladite surface de came (31),
   - une articulation (24) portée également par le cadre mobile (17) et reliant celui-ci au volet amont (10), qui est articulé en un autre point au volet aval (11),
   et en ce que le quadrilatère (24, 28, 29, 37) dont les sommets relient le cadre mobile (17), la pièce à came (26) et les deux volets amont et aval (10, 11), a au moins deux côtés opposés de hauteur différente.

2. Tuyère selon la revendication 1, caractérisée en ce que deux ensembles de commande logés à l'extérieur d'une même paroi fixe (8) ont en commun ledit cadre mobile (17).

3. Tuyère selon la revendication 2, caractérisée en ce que ledit cadre mobile (17) peut pivoter autour d'un axe perpendiculaire au plan des parois fixes et situé dans le plan de symétrie AA de la tuyère.

4. Tuyère selon la revendication 2 ou 3, caractérisée en ce que le cadre mobile (17) situé d'un côté de la tuyère est relié au cadre mobile situé de l'autre côté de la tuyére pour constituer une structure rectangulaire rigide.

5. Tuyère selon l'une des revendications précédentes, caractérisée en ce que la pièce à came (26) est maintenue en appui contre le galet de came (33) par l'effet de la poussée du fluide circulant dans la tuyère, et que des moyens (32, 35, 36) sont prévus pour maintenir ladite came (31) en contact avec ledit galet de came (33) même en l'absence de poussée du fluide.

6. Tuyère selon l'une des revendications précédents, caractérisée en ce qu'elle comporte un volet extérieur mobile (15), relié au volet aval (11) par au moins une bielle (40).

7. Tuyère selon l'une des revendications précédentes, caractérisée en ce qu'elle comprend des volets de déviation de jet (12 à 14, 16), qui s'ouvrent pour laisser passage au fluide sous l'effet d'un déplacement du cadre (17).

8. Tuyère selon la revendication 7, caractérisée en ce qu'elle comprend un système arti culé (42 à 59) de commande des volets de déviation de jet (12 à 14,16) et des moyens (60 à 65) pour maintenir ces volets fermés pendant une partie du trajet du cadre (17) correspondant à une première gamme de disposition des volets amont et aval (10 et 11) et pour ouvrir ces volets pendant une seconde partie du trajet du cadre correspondant à une seconde gamme de disposition des volets amont et aval, cette seconde gamme comprenant une disposition où la tuyère est fermée vers l'aval.

9. Tuyère selon la revendication 8, caractérisée en ce que lesdits moyens pour maintenir les volets d'inversion de poussée comprennent un galet (60) ou un touchau de came, qui se déplace dans une glissière (59), ou le long d'une came, comportant une partie rectiligne (64) et une partie courbe (65).

10. Tuyère selon l'une des revendications 8 ou 9, caractérisée en ce que le système articulé de commande des volets d'inversion de poussée (12 à 14, 16) est sensible à un déplacement longitundinal du cadre (17), mais non à un changment d'inclinaison de ce cadre par rapport au plan de symétrie de la tuyère.

11. Tuyère selon l'une des revendications 3 à 10, caractérisée en ce que le système articulé est relié au cadre mobile (17) en un point situé sur l'axe de pivotement (AA) dudit cadre.

12. Tuyère selon l'une des revendications 1 à 11, caractérisée en ce qu'elle comporte des panneaux latéraux fixes. à double peau, dont la peau interne constitue ladite paroi latérale fixe, et en ce que le système de commande est logé entre les deux peaux desdits panneaux latéraux.

## Claims

1. A gas turbine engine tail pipe comprising a fixed square or rectangular structure with two fixed parallel walls (8) and two movable parts each made up of an assembly of flaps capable of pivoting around parallel axes so as to take up variable positions and to cause the cross section, the convergency or divergency, and the orientation of the tail pipe to alter, as well as providing a configuration to produce the reversal of thrust, these flap assemblies each comprising:
   – at least one upstream flap (10),
   – at least one downstream flap (11), hinged on it and constituting with it a part of the internal surface of the tail pipe,
   – at least one thrust-reversing flap (14) capable of passing from a position where it forms part of the walls of an airway to one where it forms part of the walls of a channel for the reversal of thrust, the said tail pipe comprising in addition a rampowered control system with linkages to move the said flaps, this control system being housed on the outer side of the fixed walls (8), characerised in that the control system is formed of four control units, each housed outside a fixed lateral wall (8) and each comprising:
   – a movable frame (17) capable of being moved parallel to the longitudinal axis AA of the tail pipe,
   – a cam-shaped component (26), hinged both on the said frame (17) and on the downstream flap (11) and carrying a cam profile (31),
   – a fixed, cam follower idler (34), working in conjunction with the said cam profile (31),
   – an articulation (24) also carried on the movable frame (17) and connecting this to the upstream flap (10) which is hinged at another point to the downstream flap (12), and in that the quadrilateral (24, 28, 29, 37) of which the corners connect the movable frame (17), the cam-shaped component (26), and the two upstream and downstream flaps (10, 11), has at least two opposite sides of unequal length.

2. A tail pipe in accordance with Claim 1, characterised in that these two control assemblies housed on the outside of the same fixd wall (8) have in common the same movable frame (17).

3. A tail pipe in accordance with Claim 2, characterised in that the said movable frame (17) can pivot on an axis perpendicular to the plane of the fixed walls and situated in the plane of symmetry AA of the tail pipe.

4. A tail pipe in accordance with Claims 2 or 3, characterised in that the said movable frame (17) situated on one side of the tail pipe is connected to the movable frame on the other side of the tail pipe so as to constitute a rigid rectangular structure.

5. A tail pipe in accordance with one of the preceding Claims, characterised in that the cam-shaped component (26) is held in contact with the cam idler (33) by the effect of the pressure of the fluid passing through the tail pipe, and that means (32, 35, 36) are provided for maintaining the said cam profile (31) in contact with the said cam idler (33), even in the absence of fluid pressure.

6. A tail pipe in accordance with one of the preceding Claims, characterised in that it comprises an external movable flap (13), connected to the downstream flap (11) by means of a connecting rod (40).

7. A tail pipe in accordance with one of the preceding Claims, characterised in that it comprises flaps for deflecting the jet (12 to 14, 16) which, as a result of the movement of the frame (17) open to allow the fluid to pass through.

8. A tail-pipe in accordance with Claim 7 characterised in that it comprises an articulated system (42 to 59) to control the jet deflector flaps (12 to 14, 16) and a means (60 to 65) of keeping these flap in the closed position during a part of the travel of the frame (17) corresponding to an initial range of configurations of the upstream and downstream flaps (10 and 11) and to open these flaps during a second part of the travel of the frame corresponding to a second range of configurations of the upstream and downstream flaps, this second range corresponding to a configuration whereby the tail pipe is closed off towards the rear.

9. A tail pipe in accordance with Claim 8, characterised in that the said means of maintaining the thrust-reversing flaps closed comprises an idler (60), or cam follower, which moves within a slide (59), or along the length of a cam comprising one straight section (64) and another section (65) which is curved.

10. A tail pipe in accordance with one of the Claims 8 or 9, characterised in that the articulated control system for the thrust-reversing flaps (12 to 14, 16) is sensitive to a longitudinal movement of the frame (17), but not to a change of the angle of inclination of this frame in relation to the plane of symmetry of the tail pipe.

11. A tail pipe in accordance with one of the Claims 3 to 10, characterised in that the articulated system is connected to the movable frame (17) at a point stuated on the axis rotation (AA) of the said frame.

12. A tail pipe in accordance with one of the Claims 1 to 11, characterised in that it comprises fixed, double-skinned side panels of which the inner skin constitutes the said fixed side wall, and in that the control system is housed entirely between the said two side panels.

**Patentansprüche**

1. Gasturbinen-Schubdüse mit einer festen Struktur mit quadratischem oder rechteckigem Querschnitt, die zwei parallele feste Wände (8) und zwei bewegliche Teile aufweist, die jeweils aus einer Gruppe von Klappen bestehen, die um parallele Achsen verschwenkbar sind, um variable Positionen einzunehmen und dabei den Querschnitt, die konvergierende/divergierende Form und die Orientierung der Düse zu verändern und um der Gruppe von Klappen eine Schubumkehrkonfiguration zu verleihen, wobei die Gruppen von Klappen jeweils folgende Teile umfassen:
– wenigstens eine stromaufwärtige Klappe (10),
– wenigstens eine stromabwärtige Klappe (11), die an der stromaufwärtigen Klappe angelenkt ist und mit dieser einen Teil der Innenfläche der Düse bildet:
– wenigstens eine Schubumkehrklappe (14), die aus einer Position, in der sie einen Teil der Außenwand der Düse bildet, in eine Position übergehen kann, in der sie Teil der Wandungen eines Schubumkehrdurchgangs bildet, und wobei die Düse außerdem ein an der Außenseite der festen Wände (8) angeordnetes Steuersystem mit Zylindern und Gelenkstangen zum Bewegen der Klappen aufweist, dadurch gekennzeichnet, daß das Steuersystem aus vier Steuergruppen besteht, die alle außen an einer festen Seitenwand (8) angebracht sind und von denen jedes
– einen beweglichen Rahmen (17), der parallel zur Längsachse (A) der Düse verschiebbar ist,
– ein Nockenteil (26), das einerseits an dem genannten Rahmen (17) und andererseits an einer stromabwärtigen Klappe (11) angelenkt ist und eine Nockenfläche (31) besitzt,
– eine mit dieser Nockenfläche (31) zusammenwirkende feste Nockenrolle (33),
– und ein ebenfalls von dem beweglichen Rahmen (17) getragenes Gelenk (24), das diesen Rahmen mit der stromaufwärtigen Klappe (10) verbindet, die in einem anderen Punkt an der stromabwärtigen Klappe (11) angelenkt ist, aufweist, und daß das Gelenkviereck (24, 28, 29, 37), dessen Ecken den beweglichen Rahmen (17), das Nockenteil (26), die stromaufwärtige Klappe (10) und die stromabwärtige Klappe (11) miteinander verbindet, wenigstens zwei gegenüberliegende Seiten unterschiedlicher Höhe hat.

2. Düse nach Anspruch 1, dadurch gekennzeichnet, daß zwei Steuergruppen, die außen an ein und derselben festen Wand (8) angebracht sind, den genannten beweglichen Rahmen (17) gemeinsam haben.

3. Düse nach Anspruch 2, dadurch gekennzeichnet, daß der bewegliche Rahmen (17) um eine Achse verschwenkbar ist, die senkrecht zur Ebene der festen Wände verläuft und in der Symmetrieebene (AA) der Düse liegt.

4. Düse nach Anspruch 2 oder 3, dadurch gekennzeichnet, daß der auf einer Seite der Düse liegende bewegliche Rahmen (17) mit dem auf der anderen Seite der Düse liegenden beweglichen Rahmen verbunden ist, um eine starre Rechteckkonstruktion zu bilden.

5. Düse nach einem der vorhergehenden Ansprüche, dadurch gekennzeichnet, daß das Nockenteil (26) durch die Druckwirkung des in der Düse zirkulierenden Fluids gegen die Nockenrolle (33) angedrückt wird und daß Mittel (32, 35, 36) vorgesehen sind, die die Nockenfläche (31) auch dann mit der Nockenrolle (33) in Kontakt halten, wenn keine Fluid-Druckkraft vorhanden ist.

6. Düse nach einem der vorhergehenden Ansprüche, gekennzeichnet durch eine bewegliche äußere Klappe (15), die mit der stromabwärtigen Klappe (11) über wenigstens eine Gelenkstange (40) verbunden ist.

7. Düse nach einem der vorhergehenden Ansprüche, gekennzeichnet durch Klappen (12 bis 14, 16) zur Strömungsumlenkung, die sich unter der Wirkung einer Verschiebung des Rahmens (17) öffnen, um dem Fluid einen Druchgang zu belassen.

8. Düse nach Anspruch 7, gekennzeichnet durch ein Gelenksystem (42 bis 59) zur Steuerung der Klappen (12 bis 14, 16) zur Strömungsumlenkung sowie durch Mittel (60 bis 65), die dazu dienen, diese Klappen während eines einem ersten Bereich der der stromaufwärtigen und stromabwärtigen Klappen (10 und 11) entsprechenden Teils der Wegstrecke des Rahmens (17) geschlossen zu halten und sie während eines einem zweiten Bereich der Anordnung der stromaufwärtigen und stromabwärtigen Klappen entsprechenden Teils der Wegstrecke des Rahmens (17) zu öffnen, wobei dieser zweite Bereich eine Anordnung umfaßt, in der die Düse zur stromabwärtigen Seite hin geschlossen ist.

9. Düse nach Anspruch 8, dadurch gekennzeichnet, daß die genannten Mittel zum Halten der Schubumkehrdüse eine Nockenrolle (60) oder einen Nockenfolger umfassen, die bzw. der sich in einer Gleitbahn (59) oder längs einer Nocke mit einem geradlinigen Teil (64) und einem gekrümmten Teil (65) verschiebt.

10. Düse nach einem der Ansprüche 8 oder 9, dadurch gekennzeichnet, daß das Gelenksystem zur Steuerung der Schubumkehrklappen (12 bis 14, 16) auf eine Längsverschiebung des Rahmens (17) jedoch nicht auf eine Neigungsänderung des Rahmens relativ zu der Symmetrieebene der Düse anspricht.

11. Düse nach einem der Ansprüche 3 bis 10, dadurch gekennzeichnet, daß das Gelenksystem mit dem beweglichen Rahmen (17) in einem Punkt verbunden ist, der auf der Schwenkachse (AA) des Rahmens liegt.

12. Düse nach einem der Ansprüche 1 bis 11, dadurch gekennzeichnet, daß sie feste, doppelschalige Seitenplatten besitzt, deren Innenschale die genannte feste Seitenwand bildet, und daß das Steuersystem zwischen den beiden Schalen dieser Seitenplatten angeordnet ist.

FIG.:1

FIG.: 2

EP 0 275 757 B1

EP 0 275 757 B1

FIG.: 3

FIG.: 4

FIG.: 5

FIG.: 6